(19) Europäisches Patentamt
European Patent Office
Office européen des brevets

(11) EP 4 700 896 A1

(12) **EUROPEAN PATENT APPLICATION**

(43) Date of publication:
**25.02.2026 Bulletin 2026/09**

(21) Application number: **25187135.6**

(22) Date of filing: **03.07.2025**

(51) International Patent Classification (IPC):
***H01M 10/0567*** *(2010.01)* ***H01M 10/0568*** *(2010.01)*
***H01M 10/0569*** *(2010.01)*

(52) Cooperative Patent Classification (CPC):
**H01M 10/0567; H01M 10/0568; H01M 10/0569;**
H01M 2300/004

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **21.08.2024 KR 20240112114**

(71) Applicant: **SAMSUNG SDI CO., LTD.**
**Yongin-si, Gyeonggi-do 17084 (KR)**

(72) Inventors:
- **Ji, Woojung**
  **17084 Yongin-si, Gyeonggi-do (KR)**
- **Choi, Hyunbong**
  **17084 Yongin-si, Gyeonggi-do (KR)**
- **Park, Sangwoo**
  **17084 Yongin-si, Gyeonggi-do (KR)**
- **Park, Hongryeol**
  **17084 Yongin-si, Gyeonggi-do (KR)**
- **Yang, Yeji**
  **17084 Yongin-si, Gyeonggi-do (KR)**
- **Jun, Dasol**
  **17084 Yongin-si, Gyeonggi-do (KR)**
- **Shin, Youngkyeong**
  **17084 Yongin-si, Gyeonggi-do (KR)**
- **Kim, Sanghoon**
  **17084 Yongin-si, Gyeonggi-do (KR)**
- **Kim, Sohee**
  **17084 Yongin-si, Gyeonggi-do (KR)**
- **Lim, Seiyeon**
  **17084 Yongin-si, Gyeonggi-do (KR)**

(74) Representative: **Gulde & Partner**
**Patent- und Rechtsanwaltskanzlei mbB**
**Berliner Freiheit 2**
**10785 Berlin (DE)**

(54) **ELECTROLYTE FOR RECHARGEABLE LITHIUM BATTERY AND RECHARGEABLE LITHIUM BATTERY INCLUDING THE SAME**

(57) Disclosed are electrolytes and rechargeable lithium batteries. The electrolyte comprises a lithium salt, a non-aqueous organic solvent, a first additive represented by Chemical Formula 1, and a second additive represented by Chemical Formula 2.

[Chemical Formula 1]

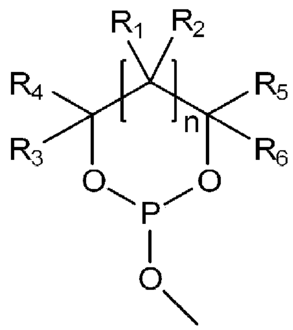

[Chemical Formula 2]

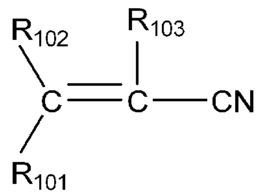

EP 4 700 896 A1

## Description

### BACKGROUND

The present disclosure relates to an electrolyte for a rechargeable lithium battery and a rechargeable lithium battery including the same.

Recently, with the rapid spread of battery using electronic devices, such as mobile phones, laptop computers, and electric vehicles, there is a rapidly increasing demand for rechargeable batteries with high energy density and high capacity. Therefore, intensive research has been conducted to improve performance of rechargeable lithium batteries.

A rechargeable lithium battery includes a positive electrode, a negative electrode, and an electrolyte, which positive and negative electrodes include an active material in which intercalation and deintercalation are possible, and generates electrical energy caused by oxidation and reduction reactions when lithium ions are intercalated and deintercalated.

A lithium salt dissolved in a non-aqueous organic solvent is used as the electrolyte of the rechargeable lithium battery. Characteristics of the rechargeable lithium battery are exhibited by complex reactions between the positive electrode and the electrolyte and between the negative electrode and the electrolyte. Accordingly, the use of an appropriate electrolyte is one of importance variables for improvement of the rechargeable lithium battery.

### SUMMARY

The invention is defined by the appended claims. The description that follows is subjected to this limitation. Any disclosure lying outside the scope of said claims is only intended for illustrative as well as comparative purposes.

An embodiment of the present disclosure provides a rechargeable lithium battery whose lifespan characteristics and stability are all improved at room and high temperatures.

An embodiment of the present disclosure provides a rechargeable lithium battery including the electrolyte.

An electrolyte for a rechargeable lithium battery comprises: a lithium salt; a non-aqueous organic solvent; a first additive represented by Chemical Formula 1; and a second additive represented by Chemical Formula 2.

[Chemical Formula 1]

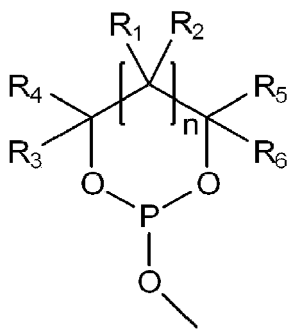

[Chemical Formula 2]

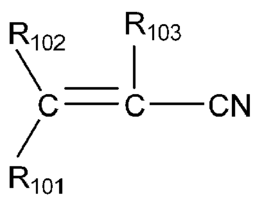

In Chemical Formulae 1 and 2,

$R_1$ to $R_6$ are each identical or different, and are each independently hydrogen, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group.

$R_{101}$ and $R_{102}$ are each independently hydrogen or a substituted or unsubstituted C1 to C10 alkyl group.
$R_{103}$ is hydrogen, a substituted or unsubstituted C1 to C10 alkyl group, a substituted or unsubstituted C2 to C10 alkenyl group, or a substituted or unsubstituted C6 to C20 aryl group.

The subscript n is an integer of 0 to 10.

A rechargeable lithium battery comprises: a positive electrode that comprises a positive electrode active material; a negative electrode that comprises a negative electrode active material; and the electrolyte for the rechargeable lithium battery.

BRIEF DESCRIPTION OF DRAWINGS

FIG. 1 illustrates a conceptual diagram partially showing a rechargeable lithium battery according to an embodiment of the present disclosure.
FIGS. 2 to 5 illustrate diagrams showing a rechargeable lithium battery according to an embodiment of the present disclosure, with FIG. 2 showing a cylindrical battery, FIG. 3 showing a prismatic battery, and FIGS. 4 and 5 showing pouch-type batteries.

DETAILED DESCRIPTION OF EMBODIMENTS

In order to sufficiently understand the configuration and effect of the present disclosure, some embodiments of the present disclosure will be described with reference to the accompanying drawings. It should be noted, however, that the present disclosure is not limited to the following exemplary embodiments, and may be implemented in various forms.

In this description, it will be understood that, when an element is referred to as being on another element, the element can be directly on the other element or intervening elements may be present between therebetween. In the drawings, thicknesses of some components are exaggerated for effectively explaining the technical contents. Like reference numerals refer to like elements throughout the specification.

Unless otherwise specially noted in this description, the expression of singular form may include the expression of plural form. The terms "comprises/includes" and/or "comprising/including" used in this description do not exclude the presence or addition of one or more other components.

In this description, the term "combination thereof" may refer to a mixture, a stack, a composite, a copolymer, an alloy, a blend, or a reaction product.

In this description, unless otherwise separately defined, the term "substituted" refers to that at least one hydrogen of a substituent or a compound is substituted by deuterium, a halogen group, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, C1 to C20 alkoxy group, a C1 to C10 fluoroalkyl group, or a cyano group.

For example, the term "substituted" may refer to that at least one hydrogen of a substituent or a compound is substituted by deuterium, a halogen group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. For example, the term "substituted" may refer to that at least one hydrogen of a substituent or a compound is substituted by deuterium, a halogen group, a C1 to C20 alkyl group, a C6 to C30 aryl group, a C1 to C10 fluoroalkyl group, or a cyano group. Alternatively, the term "substituted" may refer to that at least one hydrogen of a substituent or a compound is substituted by deuterium, a halogen group, a C1 to C5 alkyl group, a C6 to C18 aryl group, a C1 to C5 fluoroalkyl group, or a cyano group. For example, the term "substituted" may refer to that at least one hydrogen of a substituent or a compound is substituted by deuterium, a cyano group, a halogen group, a methyl group, an ethyl group, a propyl group, a butyl group, a phenyl group, a biphenyl group, a terphenyl group, a trifluomethyl group, or a naphthyl group.

FIG. 1 illustrates a conceptual diagram partially showing a rechargeable lithium battery according to an embodiment of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced apart from each other across the separator 30. The separator 30 may be disposed between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated in the electrolyte ELL.

The electrolyte ELL may be a medium by which lithium ions are transferred between the positive electrode 10 and the negative electrode 20. In the electrolyte ELL, the lithium ions may move through the separator 30 toward one of the

positive electrode 10 and the negative electrode 20.

In recent, most commercialized lithium ion battery uses $LiPF_6$ as a lithium salt in the electrolyte. However, $LiPF_6$ may react with moisture within the lithium ion battery to form $PF_5$, while being decomposed into HF, and the highly reactive substance HF may induce degradation in lifespan characteristics and high-temperature storage properties of the lithium ion battery. Although a fluorophosphite-based additive is used which can stabilize $PF_5$ by donating electrons and utilizing Lewis acid properties of $PF_5$, $F^-$ ions released from the fluorophosphite-based additive may cause side reactions to degrade performance of the lithium ion battery. For example, when the positive electrode active material includes lithium iron phosphate-based compound, such as lithium iron phosphate (LFP) or lithium manganese iron phosphate (LMFP), these side reactions may accelerate the degradation in performance of the lithium ion battery.

As an electrolyte for a rechargeable lithium battery according to an embodiment of the present disclosure includes a first additive represented by Chemical Formula 1 and a second additive represented by Chemical Formula 2, it may be possible to effectively suppress the side reactions resulting from F- ions and to improve lifespan characteristics and stability not only at room temperature but also at high temperatures.

Electrolyte for Rechargeable Lithium Battery

The electrolyte for the rechargeable lithium battery according to an embodiment of the present disclosure includes a lithium salt, a non-aqueous organic solvent, a first additive represented by Chemical Formula 1, and a second additive represented by Chemical Formula 2.

[Chemical Formula 1]

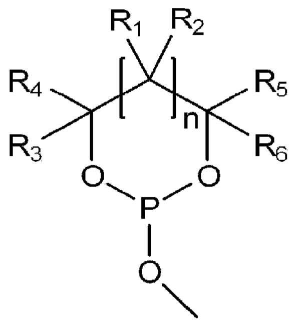

[Chemical Formula 2]

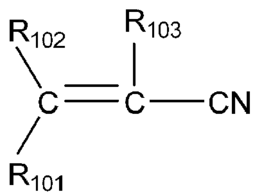

In Chemical Formulae 1 and 2,

$R_1$ to $R_6$ are each identical or different, and are each independently hydrogen, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group.

$R_{101}$ and $R_{102}$ are each independently hydrogen or a substituted or unsubstituted C1 to C10 alkyl group.

$R_{103}$ is hydrogen, a substituted or unsubstituted C1 to C10 alkyl group, a substituted or unsubstituted C2 to C10 alkenyl group, or a substituted or unsubstituted C6 to C20 aryl group.

The subscript n is an integer of 0 to 10.

The non-aqueous organic solvent may serve as a medium for transmitting ions that participate in electrochemical reactions of batteries.

The non-aqueous organic solvent may include a carbonate-based solvent, an ester-based solvent, an ether-based solvent, a ketone-based solvent, an alcohol-based solvent, an aprotic solvent, or a mixture thereof. The non-aqueous organic solvent may be used alone or in a mixture of two or more substances.

The carbonate-based solvent may include dimethyl carbonate (DMC), diethyl carbonate (DEC), dipropyl carbonate (DPC), methylpropyl carbonate (MPC), ethylpropyl carbonate (EPC), ethylmethyl carbonate (EMC), ethylene carbonate (EC), propylene carbonate (PC), or butylene carbonate (BC).

The ester-based solvent may include methyl acetate, ethyl acetate, n-propyl acetate, dimethyl acetate, methyl propionate, ethyl propionate, decanolide, mevalonolactone, valerolactone, or caprolactone.

The ether-based solvent may include dibutyl ether, tetraglyme, diglyme, dimethoxyethane, 2-methyltetrahydrofuran, 2.5-dimethyltetrahydrofuran, or tetrahydrofuran. The ketone-based solvent may include cyclohexanone. The alcohol-based solvent may include ethyl alcohol or isopropyl alcohol, and the aprotic solvent may include nitriles such as R-CN (where R is a hydrocarbon group having a C2 to C20 linear, branched, or cyclic structure and may include a double bond, an aromatic ring, or an ether group); amides such as dimethylformamide; dioxolanes such as 1,3-dioxolane or 1.4-dioxolane; or sulfolanes.

In addition, when a carbonate-based solvent is used as the non-aqueous organic solvent, cyclic carbonate and linear carbonate may be mixed and used, and the cyclic carbonate and the linear carbonate may be mixed in a volume ratio of 1:1 to 1:9.

For example, the non-aqueous organic solvent may include at least one selected from ethylene carbonate (EC), propylene carbonate (PC), propyl propionate (PP), ethylmethyl carbonate (EMC), dimethyl carbonate (DMC), diethyl carbonate (DEC), dipropyl carbonate (DPC), methylpropyl carbonate (MPC), ethylpropyl carbonate (EPC), and butylene carbonate (BC).

For example, the non-aqueous organic solvent may be a mixed solvent of ethylene carbonate (EC), ethylmethyl carbonate (EMC), and dimethyl carbonate (DMC).

For example, the ethylene carbonate (EC) may be included in an amount of 10 vol% to 30 vol% relative to the total volume of the non-aqueous organic solvent. The ethylmethyl carbonate (EMC) may be included in an amount of 20 vol% to 70 vol% or 35 vol% to 60 vol% relative to the total volume of the non-aqueous organic solvent. The dimethyl carbonate (DMC) solvent may be included in an amount of 5 vol% to 50 vol% or 10 vol% to 40 vol% relative to the total volume of the non-aqueous organic solvent.

The ethylene carbonate (EC), the ethylmethyl carbonate (EMC), and the dimethyl carbonate (DMC) may be present in a volume ratio of 1:a:b, where a may be 1 to 3 or 1.5 to 2.5, and b may be 0.5 to 2 or 0.5 to 1.5.

The lithium salt may be a material that is dissolved in the organic solvent to serve as a supply source of lithium ions in batteries and plays a role in enabling a basic operation of rechargeable lithium batteries and promoting transportation of lithium ions between positive and negative electrodes. The lithium salt may include, for example, at least one selected from $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (where x and y are integers between 1 to 20), lithium trifluoromethane sulfonate, lithium tetrafluoroethanesulfonate, lithium difluorobis(oxalato)phosphate (LiDFBOP), and lithium bis(oxalato)borate (LiBOB)

For example, the lithium salt may include one or more of $LiPF_6$, $LiClO_4$, $LiBF_4$, lithium bis(fluorosulfonyl)imide, LiTFSI, $LiSO_3CF_3$, LiBOB, LiFOB, LiDFBOP, LiTFOP, $LiPO_2F_2$, $LiSbF_6$, $LiAsF_6$, $LiAlO_2$, $LiAlCl_4$, LiCl, LiI, $LiN(SO_3C_2F_5)_2$, $Li(FSO_2)_2N$, and $LiC_4F_9SO_3$. For example, the lithium salt may include LiPF6.

The lithium salt may have a concentration of 0.1 M to 2.0 M. For example, the lithium salt may have a concentration of 0.5 M to 1.0 M, equal to or less than 2.0 M, equal to or less than 1.7 M, or equal to or less than 1. 5 M. As the concentration of the lithium salt falls within the range above, the electrolyte may appropriately maintain its conductivity and viscosity.

The first additive is represented by Chemical Formula 1.

[Chemical Formula 1]

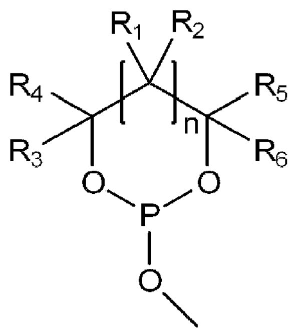

In Chemical Formula 1,

$R_1$ to $R_6$ are each identical or different, and are each independently be hydrogen, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group, and n is an integer of 0 to 10.

For example, $R_1$ to $R_6$ may be identical or different, and may each independently be hydrogen, a substituted or unsubstituted C1 to C10 alkyl group, a substituted or unsubstituted C1 to C10 alkoxy group, a substituted or unsubstituted C2 to C10 alkenyl group, a substituted or unsubstituted C2 to C10 alkynyl group, a substituted or unsubstituted C3 to C10 cycloalkyl group, a substituted or unsubstituted C6 to C10 aryl group, or a substituted or unsubstituted C2 to C15 heteroaryl group. For example, $R_1$ to $R_6$ may each be hydrogen, and n may be 0 or 1.

The first additive may be represented by Chemical Formula 1-1 or Chemical Formula 1-2.

[Chemical Formula 1-1]

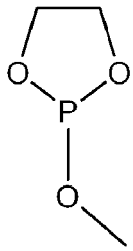

[Chemical Formula 1-2]

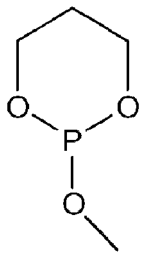

The second additive is represented by Chemical Formula 2.

[Chemical Formula 2]

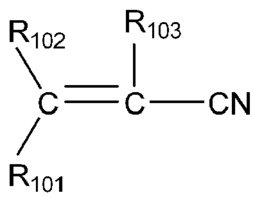

In Chemical Formula 2,

$R_{101}$ and $R_{102}$ are each independently hydrogen or a substituted or unsubstituted C1 to C10 alkyl group, and $R_{103}$ is hydrogen, a substituted or unsubstituted C1 to C10 alkyl group, a substituted or unsubstituted C2 to C10 alkenyl group, or a substituted or unsubstituted C6 to C20 aryl group.

For example, $R_{101}$ and $R_{102}$ may each independently be hydrogen or a substituted or unsubstituted C1 to C5 alkyl group, and $R_{103}$ may be hydrogen, a substituted or unsubstituted C1 to C5 alkyl group, a substituted or unsubstituted C2 to C5 alkenyl group, or a substituted or unsubstituted C6 to C15 aryl group. For example, $R_{101}$ to $R_{103}$ may each independently be hydrogen or a substituted or unsubstituted C1 to C5 alkyl group.

The second additive may be represented by one of Chemical Formulae 2-1 to 2-3.

[Chemical Formula 2-1]

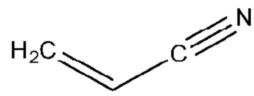

[Chemical Formula 2-2]

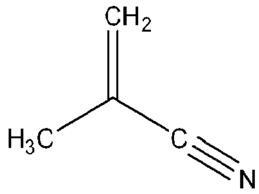

[Chemical Formula 2-3]

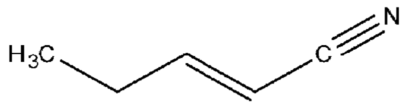

For example, the second additive may be at least one selected from acrylonitrile, methacrylonitrile, and 2-pentenenitrile.

The first additive may be present in an amount of 0.01 wt% to 5 wt% relative to the total weight of the electrolyte for the rechargeable lithium battery. For example, the first additive may be present in an amount of 0.05 wt% to 5 wt%, 0.05 wt% to 2.5 wt%, 0.1 wt% to 2 wt%, 0.1 wt% to 1 wt%, or 0.5 wt% to 1.5 wt% relative to the total weight of the electrolyte for the rechargeable lithium battery.

In addition, the second additive may be present in an amount of 0.01 wt% to 5 wt% relative to the total weight of the electrolyte for the rechargeable lithium battery. For example, the second additive may be present in an amount of 0.05 wt% to 5 wt%, 0.05 wt% to 2.5 wt%, 0.1 wt% to 2 wt%, 0.1 wt% to 1 wt%, or 0.5 wt% to 1.5 wt% relative to the total weight of the electrolyte for the rechargeable lithium battery.

A weight ratio of the first additive and the second additive may range from 1:10 to 10:1. For example, a weight ratio of the first additive and the second additive may range from 1:5 to 5:1, from 1:3 to 3:1, or from 1:2 to 2:1.

As the amounts and weight ratio of the first and second additives fall within the ranges above, it may be possible to effectively achieve a rechargeable lithium battery with improved storage and lifespan characteristics at room and high temperatures.

Rechargeable Lithium Battery

A rechargeable lithium battery according to the present disclosure may include a positive electrode including a positive electrode active material, a negative electrode including a negative electrode active material, and the aforementioned electrolyte for the rechargeable lithium battery.

Based on a shape of a rechargeable lithium battery, the rechargeable lithium battery may be classified into cylindrical, prismatic, pouch, and coin types. FIGS. 2 to 5 illustrate diagrams showing a rechargeable lithium battery according to an embodiment of the present disclosure, with FIG. 2 showing a cylindrical battery, FIG. 3 showing a prismatic battery, and FIGS. 4 and 5 showing pouch-type batteries. Referring to FIGS. 2 to 5, a rechargeable lithium battery 100 may include an electrode assembly 40 in which a separator 30 is interposed between a positive electrode 10 and a negative electrode 20, and may also include a casing 50 in which the electrode assembly 40 is accommodated. The positive electrode 10, the negative electrode 20, and the separator 30 may be impregnated in an electrolyte (not shown). The rechargeable lithium battery 100 may include a sealing member 60 that seals the casing 50 as illustrated in FIG. 2. In addition, as illustrated in FIG. 3, the rechargeable lithium battery 100 may include a positive electrode lead tab 11, a positive electrode terminal 12, a negative electrode lead tab 21, and a negative electrode terminal 22. As shown in FIGS. 4 and 5, the rechargeable lithium battery 100 may include an electrode tab 70, or a positive electrode tab 71 and a negative electrode tab 72, which electrode tab 70 serves as an electrical path for externally inducing a current generated in the electrode assembly 40.

Positive Electrode 10

A rechargeable lithium battery according to an embodiment of the present disclosure may include a positive electrode. For example, a rechargeable lithium battery according to an embodiment of the present disclosure may include a positive electrode including a positive electrode active material.

The positive electrode 10 for a rechargeable lithium battery may include a current collector COL1 and a positive electrode active material layer AML1 formed on the current collector COL1. The positive electrode active material layer AML1 may include a positive electrode active material and further include a binder and/or a conductive material.

An amount of the positive electrode active material may be 90 wt% to 99.5 wt% relative to 100 wt% of the positive electrode active material layer AML1. For example, an amount of the positive electrode active material in the positive electrode active material layer AML1 may be 92 wt% to 99.5 wt% or 95 wt% to 99 wt% relative to 100 wt% of the positive electrode active material layer AML1. For example, the positive electrode active material may be present in an amount of about 90 wt% to about 99.3 wt%, about 92 wt% to about 99.3 wt%, or about 95 wt% to about 99 wt% relative to the total weight of the positive electrode.

The positive electrode active material in the positive electrode active material layer AML1 may include a compound (e.g., lithiated intercalation compound) that can reversibly intercalate and deintercalate lithium. For example, the positive electrode active material may include at least one kind of composite oxide including lithium and metal that is selected from cobalt, manganese, nickel, and a combination thereof.

The composite oxide may include lithium transition metal composite oxide, for example, lithium-nickel-based oxide, lithium-cobalt-based oxide, lithium-manganese-based oxide, lithium-iron-phosphate-based compounds, cobalt-free nickel-manganese-based oxide, or a combination thereof.

The positive electrode active material may include lithium composite oxide represented by Chemical Formula 3.

[Chemical Formula 3] $Li_xM^1_yM^2_zM^3_{1-y-z}O_{2-a}X_a$

In Chemical Formula 3,

The subscripts x, y, z, and a may satisfy the relationship of $0.5 \le x \le 1.8$, $0 < y \le 1$, $0 \le z \le 1$, $0 \le a \le 0.05$, and $0 \le y+z \le 1$.

$M^1$, $M^2$, and $M^3$ may each independently be one or more elements selected from Ni, Co, Mn, Al, B, Ba, Ca, Ce, Cr, Fe, Mo, Nb, Si, Sr, Mg, Ti, V, W, Zr, and La.

X may be one or more elements selected from F, S, P, and Cl.

For example, the lithium composite oxide may include a compound represented by one of the following chemical formulae. $Li_aA_{1-b}X_bO_{2-c}D_c$ (where $0.90 \le a \le 1.8$, $0 \le b \le 0.5$, and $0 \le c \le 0.05$); $Li_aMn_{2-b}X_bO_{4-c}D_c$ (where $0.90 \le a \le 1.8$, $0 \le b \le 0.5$, and $0 \le c \le 0.05$); $Li_aNi_{1-b-c}Co_bX_cO_{2-\alpha}D_\alpha$ (where $0.90 \le a \le 1.8$, $0 \le b \le 0.5$, $0 \le c \le 0.5$, and $0 < \alpha < 2$); $Li_aNi_{1-b-c}Mn_dX_cO_{2-\alpha}D_\alpha$ (where $0.90 \le a \le 1.8$, $0 \le b \le 0.5$, $0 \le c \le 0.5$, and $0 < \alpha < 2$); $Li_aNi_bCo_cL^1_dG_eO_2$ (where $0.90 \le a \le 1.8$, $0 \le b \le 0.9$, $0 \le c \le 0.5$, $0 \le d \le 0.5$, and $0 \le e \le 0.1$); $Li_aNiG_bO_2$ (where $0.90 \le a \le 1.8$ and $0.001 \le b \le 0.1$); $Li_aCoG_bO_2$ (where $0.90 \le a \le 1.8$ and $0.001 \le b \le 0.1$); $Li_aMn_{1-b}G_bO_2$ (where $0.90 \le a \le 1.8$ and $0.001 \le b \le 0.1$); $Li_aMn_2G_bO_4$ (where $0.90 \le a \le 1.8$ and $0.001 \le b \le 0.1$); $Li_aMn_{1-g}G_gPO_4$ (where $0.90 \le a \le 1.8$ and $0 \le g \le 0.5$); $Li_{(3-f)}Fe_2(PO_4)_3$ (where $0 \le f \le 2$); $Li_aFePO_4$ (where $0.90 \le a \le 1.8$).

In the chemical formulae above, A may be Ni, Co, Mn, or a combination thereof, X may be Al, Ni, Co, Mn, Cr, Fe, Mg, Sr, V, a rare-earth element, or a combination thereof, D may be O, F, S, P, or a combination thereof, G may be Al, Cr, Mn, Fe, Mg, La, Ce, Sr, V, or a combination thereof, and $L^1$ may be Mn, Al, or a combination thereof.

In the lithium composite oxide, nickel may be present in an amount of equal to or greater than 50 mol% relative to 100 mol% of metal exclusive of lithium. For example, in the lithium composite oxide, nickel may be present in an amount of equal to or greater than 65 mol%, 80 mol%, 85 mol%, 90 mol%, 91 mol%, 94 mol%, or 99 mol% relative to 100 mol% of metal exclusive of lithium.

For example, the positive electrode active material may include one or more of lithium iron phosphate (LFP), lithium manganese iron phosphate (LMFP), lithium nickel cobalt aluminum oxide (NCA), lithium nickel cobalt manganese oxide (NCM), lithium cobalt oxide (LCO), lithium manganese oxide (LMO), and lithium nickel manganese oxide (LNMO).

The positive electrode may include a binder. The positive electrode binder may serve to improve attachment of positive electrode active material particles to each other and also to improve attachment of the positive electrode active material to the current collector COL1.

The binder may serve to improve attachment of positive electrode active material particles to each other and also to improve attachment of the positive electrode active material to the current collector COL1. The binder may include, for example, polyvinyl alcohol, carboxymethyl cellulose, hydroxypropyl cellulose, diacetyl cellulose, polyvinylchloride, carboxylated polyvinylchloride, polyvinylfluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, or nylon, but the present disclosure is not limited thereto.

For example, the positive electrode may include a binder including one or more of polyvinyl alcohol, carboxymethyl cellulose, hydroxypropyl cellulose, diacetyl cellulose, polyvinyl chloride, carboxylated polyvinyl chloride, polyvinyl fluoride, polyethylene oxide, polyvinylpyrrolidone, polyurethane, polytetrafluoroethylene, polyvinylidene fluoride, polyethylene, and polypropylene.

The binder may be present in an amount of 0.5 wt% to 5 wt% relative to the total weight of the positive electrode. For example, the binder may be present in an amount of 1 wt% to 4.5 wt% or 1.5 wt% to 4 wt% relative to the total weight of the positive electrode.

The conductive material may be used to provide an electrode with conductivity, and any suitable conductive material that does not cause a chemical change in a battery may be used as the conductive material. The conductive material may include, for example, a carbon-based material such as natural graphite, artificial graphite, carbon black, acetylene black, Ketjen black, carbon fiber, carbon nano-fiber, and carbon nano-tube; a metal powder or metal fiber containing one or more of copper, nickel, aluminum, and silver; a conductive polymer such as a polyphenylene derivative; or a mixture thereof.

For example, the positive electrode may include a conductive material including a carbon-based material, a metal-based material in the form of metal powder or metal fiber, a conductive polymer, or a mixture thereof.

The conductive material may be present in an amount of 0.5 wt% to 5 wt% relative to the total weight of the positive electrode. For example, the positive electrode conductive material may be present in an amount of 0.5 wt% to 4 wt%, 0.5 wt% to 3.5 wt%, or 0.5 wt% to 2 wt% relative to the total weight of the positive electrode.

Aluminum (Al) may be used as the current collector COL1, but the present disclosure is not limited thereto.

Negative Electrode 20

A rechargeable lithium battery according to an embodiment of the present disclosure may include a negative electrode. For example, a rechargeable lithium battery according to an embodiment of the present disclosure may include a negative electrode including a negative electrode active material.

The negative electrode 20 for a rechargeable lithium battery may include a current collector COL2 and a negative electrode active material layer AML2 positioned on the current collector COL2. The negative electrode active material layer AML2 may include a negative electrode active material and may further include one or more of a binder and a conductor.

The negative electrode active material in the negative electrode active material layer AML2 may include a material that can reversibly intercalate and deintercalate lithium ions, lithium metal, a lithium metal alloy, a material that can dope and de-dope lithium, or transition metal oxide.

The material that can reversibly intercalate and deintercalate lithium ions may include a carbon-based negative electrode active material, for example, crystalline carbon, amorphous carbon, or a combination thereof. For example, the crystalline carbon may include graphite such as non-shaped, sheet-shaped, flake-shaped, sphere-shaped, or fiber-shaped natural or artificial graphite, and the amorphous carbon may include soft carbon, hard carbon, mesophase pitch carbon, or calcined coke.

The lithium metal alloy may include an alloy of lithium and metal that is selected from Na, K, Rb, Cs, Fr, Be, Mg, Ca, Sr, Si, Sb, Pb, In, Zn, Ba, Ra, Ge, Al, and Sn.

The material that can dope and de-dope lithium may include a Si-based negative electrode active material or a Sn-based negative electrode active material. The Si-based negative electrode active material may include silicon, silicon-carbon composite, $SiO_x$ (where $0<x<2$), Si-Q alloy (where Q is alkali metal, alkaline earth metal, Group 13 element, Group 14 element (except for Si), Group 15 element, Group 16 element, transition metal, a rare-earth element, or a combination thereof), or a combination thereof. The Sn-based negative electrode active material may include Sn, $SnO_2$, a Sn-based alloy, a combination thereof.

The silicon-carbon composite may be a composite of silicon and amorphous carbon. In an embodiment, the silicon-carbon composite may have a structure in which the amorphous carbon is coated on a surface of the silicon particle. For example, the silicon-carbon composite may include a secondary particle (core) in which primary silicon particles are assembled, and an amorphous carbon coating layer (shell) positioned on a surface of the secondary particle. The amorphous carbon may also be positioned between the primary silicon particles, and for example, the primary silicon particles may be coated with the amorphous carbon. The secondary particles may be present dispersed in an amorphous carbon matrix.

The silicon-carbon composite may further include crystalline carbon. For example, the silicon-carbon composite may include a core including crystalline carbon and silicon particles and may also include an amorphous carbon coating layer positioned on a surface of the core.

The Si-based negative electrode active material or the Sn-based negative electrode active material may be used in combination with a carbon-based negative electrode active material.

The negative electrode active material in the negative electrode active material layer AML2 may be present in an amount of 90 wt% to 99 wt% relative to the total weight of the negative electrode active material layer AML2. For example,

the negative electrode active material may be present in an amount of 93 wt% to 99 wt% or 96 wt% to 98.5 wt% relative to the total weight of the negative electrode active material layer AML2.

The negative electrode active material may include at least one selected from graphite and a silicon composite.

When the negative electrode active material includes both a silicon composite and graphite, the silicon composite and the graphite may be included in the form of a mixture, and in this case, the silicon composite and the graphite may be included in a weight ratio of 1:99 to 50:50. For example, a weight ratio of the silicon composite and the graphite may be 3:97 to 20:80 or 5:95 to 20:80.

The silicon composite may include a core including silicon-based particles and an amorphous carbon coating layer, and the silicon-based particle may include at least one selected from a silicon-carbon composite, $SiO_x$ (where $0<x<2$), and a silicon alloy. For example, the silicon-carbon composite may include a core including silicon particles and crystalline carbon, and may also include an amorphous carbon coating layer positioned on a surface of the core.

The crystalline carbon may include graphite, for example, natural graphite, artificial graphite, or a mixture thereof.

The negative electrode may include a binder. The negative electrode binder may serve to improve attachment of negative electrode active material particles to each other and also to improve attachment of the negative electrode active material to the current collector COL2. The binder may include a non-aqueous binder, an aqueous binder, a dry binder, or a combination thereof.

The non-aqueous binder may include polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide imide, polyimide, or a combination thereof.

The aqueous binder may include styrene-butadiene rubber, (meth)acrylated styrene-butadiene rubber, (meth) acrylonitrile-butadiene rubber, (meth)acrylic rubber, butyl rubber, fluoro elastomer, polyethylene oxide, polyvinyl pyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenolic resin, epoxy resin, polyvinyl alcohol, or a combination thereof.

When an aqueous binder is used as the negative electrode binder, a cellulose-based compound capable of providing viscosity may further be included. The cellulose-based compound may include one or more of carboxymethyl cellulose, hydroxypropylmethyl cellulose, methyl cellulose, and alkali metal salts thereof. The alkali metal salt may include Na, K, or Li.

The dry binder may include a fibrillizable polymer material, for example, polytetrafluoroethylene, polyvinylidene fluoride, polyvinylidene fluoride-hexafluoropropylene copolymer, polyethylene oxide, or a combination thereof.

The binder may be present in an amount of 0.5 wt% to 5 wt% relative to the total weight of the negative electrode. For example, the binder may be present in an amount of 0.5 wt% to 3.5 wt% or 0.5 wt% to 2 wt% relative to the total weight of the negative electrode.

The negative electrode may include a conductive material. A description of the conductive material may be as discussed above.

The current collector COL2 may include a copper foil, a nickel foil, a stainless-steel foil, a titanium foil, a nickel foam, a copper foam, a polymer substrate coated with a conductive metal, or a combination thereof.

Separator 30

Based on a type of the rechargeable lithium battery, the separator 30 may be present between positive electrode 10 and the negative electrode 20. The separator 30 may include one or more of polyethylene, polypropylene, and polyvinylidene fluoride, and may have a multi-layered separator thereof such as a polyethylene/polypropylene bi-layered separator, a polyethylene/polypropylene/polyethylene tri-layered separator, and a polypropylene/polyethylene/polypropylene tri-layered separator.

The separator 30 may include a porous substrate and a coating layer positioned on one or opposite surfaces of the porous substrate, which coating layer includes an organic material, an inorganic material, or a combination thereof.

The porous substrate may be a polymer layer including one selected from polyolefin such as polyethylene and polypropylene, polyester such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, cyclic olefin copolymer, polyphenylenesulphide, polyethylene naphthalate, glass fiber, Teflon, and polytetrafluoroethylene, or may be a copolymer or mixture including two or more of the materials mentioned above.

The organic material may include a polyvinylidenefluoride-based copolymer or a (meth)acrylic copolymer.

The inorganic material may include an inorganic particle selected from $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, Boehmite, or a combination thereof, but the present disclosure is not limited thereto.

The organic material and the inorganic material may be present mixed in one coating layer or may be present as a

stack of a coating layer including the organic material and a coating layer including an inorganic material.

Electrolyte ELL

A rechargeable lithium battery according to an embodiment of the present disclosure may include an electrolyte for the rechargeable lithium battery.

A description of the electrolyte for the rechargeable lithium battery may be as discussed above.

The following will describe some examples and comparative examples of the present disclosure. The following embodiments, however, are merely exemplary, and the present disclosure is not limited to the embodiments discussed below.

[Embodiment]

Fabrication of Rechargeable Lithium Battery

Embodiment 1

(1) Preparation of Electrolyte

1.15 M of $LiPF_6$ was dissolved in a non-aqueous organic solvent containing ethylene carbonate (EC), ethylmethyl carbonate (EMC), and dimethyl carbonate (DMC) mixed in a volume ratio of 20:55:20, and then the mixture was added with 0.5 wt% of a first additive represented by Chemical Formula 1-1 and 1.0 wt% of a second additive represented by Chemical Formula 2-1, thereby preparing an electrolyte.

[Chemical Formula 1-1]

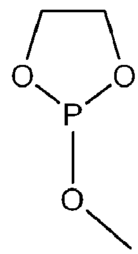

[Chemical Formula 2-1]

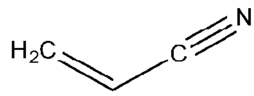

(2) Fabrication of Rechargeable Lithium Battery

$LiFePO_4$ as a positive electrode active material, polyvinylidene fluoride as a binder, and acetylene black as a conductive material were mixed in a weight ratio of 96:3:1, and the mixture was dispersed in N-methyl pyrrolidone to prepare a positive electrode active material slurry. The positive electrode active material slurry was coated on an Al foil of 15 μm in thickness, dried at 100°C, and then pressed to manufacture a positive electrode.

Artificial graphite and silicon nano-particles mixed in a weight ratio of 93:7 as a negative electrode active material, and styrene-butadiene rubber (SBR) and carboxymethyl cellulose (CMC) as a binder were mixed in a weight ratio of 98:1:1, and the mixture was dispersed in distilled water to prepare a negative electrode active material slurry. The negative electrode active material slurry was coated on a Cu foil of 10 μm in thickness, dried at 100°C, and then pressed to manufacture a negative electrode.

The positive electrode, the negative electrode, and a polyethylene separator of 10 μm in thickness were assembled to manufacture an electrode assembly, and the electrolyte prepared by the step (1) was introduced to fabricate a rechargeable lithium battery.

Embodiment 2

A rechargeable lithium battery was fabricated in the same method as in Embodiment 1, except that 0.1 wt% of the first additive and 0.5 wt% of the second additive were added in the step (1).

Embodiment 3

A rechargeable lithium battery was fabricated in the same method as in Embodiment 1, except that 0.1 wt% of the first additive was added in the step (1).

Embodiment 4

A rechargeable lithium battery was fabricated in the same method as in Embodiment 1, except that 0.5 wt% of the second additive was added in the step (1).

Embodiment 5

A rechargeable lithium battery was fabricated in the same method as in Embodiment 1, except that 1.0 wt% of the first additive and 0.5 wt% of the second additive were added in the step (1).

Embodiment 6

A rechargeable lithium battery was fabricated in the same method as in Embodiment 1, except that 1.0 wt% of the first additive was added in the step (1).

Comparative 1

A rechargeable lithium battery was fabricated in the same method as in Embodiment 1, except that neither the first additive nor the second additive was added in the step (1).

Comparative 2

A rechargeable lithium battery was fabricated in the same method as in Embodiment 1, except that the first additive was not added in the step (1).

Comparative 3

A rechargeable lithium battery was fabricated in the same method as in Embodiment 1, except that a compound represented by Chemical Formula A was used in place of the first additive in the step (1).

[Chemical Formula A]

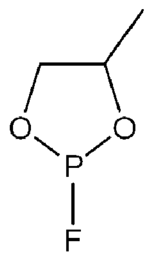

Comparative 4

A rechargeable lithium battery was fabricated in the same method as in Embodiment 1, except that 0.05 wt% of the first additive and 1.0 wt% of the second additive were added in the step (1).

Comparative 5

A rechargeable lithium battery was fabricated in the same method as in Embodiment 1, except that 1.0 wt% of the first additive and 0.05 wt% of the second additive were added in the step (1).

[Evaluation Example]

Evaluation 1: Storage Characteristics at High-temperature (60°C) (Capacity Retention Rate and DC-IR Increase Rate)

Storage characteristics at a high temperature (60°C) were evaluated for the rechargeable lithium batteries fabricated according to Embodiments 1 to 6 and Comparatives 1 to 5.

For the rechargeable lithium battery, after initial direct-current internal resistance (DC-IR) was measured as $\Delta V/\Delta I$ (voltage change/current change), the battery was allowed to charge its maximum energy state into a full charge state (SOC 100%) and stored in the charged state at a high temperature (60°C) for 60 days, and then direct-current resistance was measured to calculate a DC-IR increase rate (%) according to the following Equation A and the result was listed in Table 1.

[Equation A]

$$\text{DC-IR increase rate (\%)} = (\text{DC-IR after 60 days / initial DC-IR}) \times 100$$

In addition, the rechargeable lithium battery was charged and discharged once at 0.2 C to measure a charge-discharge capacity (initial capacity). The rechargeable lithium battery was charged to 4.25 V at 0.2 C, stored at 60°C for 30 days, and then discharged to 2.75 V at 0.5 C to measure a discharge capacity after high-temperature storage (discharge capacity after 30 days). The measured initial capacity and discharge capacity were substituted into the following Equation B to calculate a high-temperature storage capacity retention rate (%).

High-temperature storage capacity retention rate = {30 days discharge capacity/initial capacity} × 100 [Equation B]

[Table 1]

| Category | Initial DC-IR (mΩ) | DC-IR after high-temperature storage (mΩ) | DC-IR increase rate after high-temperature storage (%) | Initial storage (Ah) | 30 Days discharge capacity (Ah) | High-temperature storage capacity retention rate (%) |
|---|---|---|---|---|---|---|
| Embodiment 1 | 18.24 | 18.57 | 102 | 4.92 | 4.60 | 93.5 |
| Embodiment 2 | 18.02 | 21.50 | 119 | 4.90 | 4.51 | 92.0 |
| Embodiment 3 | 18.21 | 21.20 | 116 | 4.90 | 4.52 | 92.2 |
| Embodiment 4 | 18.39 | 19.85 | 108 | 4.91 | 4.56 | 92.9 |
| Embodiment 5 | 19.81 | 20.73 | 105 | 4.90 | 4.52 | 92.2 |
| Embodiment 6 | 20.26 | 21.36 | 105 | 4.91 | 4.56 | 92.9 |
| Comparative 1 | 16.82 | 21.03 | 125 | 4.89 | 4.40 | 90.0 |
| Comparative 2 | 17.45 | 22.15 | 127 | 4.89 | 4.45 | 91.0 |
| Comparative 3 | 17.72 | 21.60 | 122 | 4.85 | 4.40 | 90.7 |
| Comparative 4 | 17.91 | 20.90 | 117 | 4.84 | 4.41 | 91.1 |
| Comparative 5 | 18.09 | 19.55 | 108 | 4.87 | 4.44 | 91.4 |

Referring to Table 1, storage characteristics at a high temperature (60°C) are more excellent in the rechargeable lithium batteries of Embodiments than in the rechargeable lithium batteries of Comparatives 1 to 5. For example, it may be ascertained that, since the rechargeable lithium battery fabricated with the electrolyte including the first additive represented by Chemical Formula 1 and the second additive represented by Chemical Formula 2 in Embodiments 1 to 6 has excellent DC-IR increase rate and/or capacity retention rate after high-temperature storage, Embodiments 1 to 6 were found to have their superior storage characteristics at high temperatures to those of Comparatives 1 to 5 each using an additive with a structure different from that of Chemical Formula 1 or 2.

Evaluation 2: Gas Generation after Storage at High-Temperature (60°C)

A gas generation after storage at a high temperature (60°C) was evaluated for the rechargeable lithium batteries fabricated in Embodiments 1 to 6 and Comparatives 1 to 5.

For example, the rechargeable lithium battery was charged at 25°C with 0.1 C rate under the condition of constant current until a voltage reached 4.3 V (vs. Li), and 0.05 C cut-off charged under the condition of constant voltage while maintaining 4.3 V (measurement of initial gas generation amount). Afterwards, the rechargeable lithium battery was disassembled and the positive electrode plate was placed in a pouch along with the electrolyte, and then stored in an oven at 60°C for 7 days (measurement of 7-day gas generation amount). At this time, a gas generation was measured by using an Archimedes' method to convert a volume change due to a mass change of the pouch, and a high-temperature gas increase rate (%) was calculated according to the following Equation C. The Archimedes' method is a way of measuring an amount of gas generation by periodically measuring a weight of the pouch in a tank filled with water and converting a weight change into a volume change.

High-temperature gas increase rate = (7-day gas generation amount/initial gas generation amount) $\times$ 100 [Equation C]

[Table 2]

| Category | Initial gas generation amount (mL) | Gas generation amount after high-temperature storage (mL) | High-temperature gas increase rate (%) |
|---|---|---|---|
| Embodiment 1 | 10.13 | 10.42 | 103 |
| Embodiment 2 | 10.55 | 12.59 | 119 |
| Embodiment 3 | 10.52 | 12.44 | 118 |
| Embodiment 4 | 10.34 | 11.49 | 111 |
| Embodiment 5 | 10.43 | 11.98 | 115 |
| Embodiment 6 | 10.31 | 11.18 | 108 |
| Comparative 1 | 10.63 | 13.03 | 123 |
| Comparative 2 | 10.65 | 12.89 | 121 |
| Comparative 3 | 10.28 | 12.60 | 123 |
| Comparative 4 | 10.25 | 12.55 | 122 |
| Comparative 5 | 10.25 | 12.25 | 120 |

Referring to Table 2, since the rechargeable lithium batteries of Embodiments 1 to 6 have their lower gas increase rate at a high temperature (60°C) than that of the rechargeable lithium batteries of Comparatives 1 to 5, the rechargeable lithium batteries of Embodiments 1 to 6 were found to have their excellent high-temperature storage characteristics.

Evaluation 3: Room-Temperature Cycle Characteristics (Capacity Retention Rate)

Charge-Discharge cycle characteristics at room temperature were evaluated for the rechargeable lithium batteries fabricated in Embodiments 1 to 6 and Comparatives 1 to 5.

For example, a discharge capacity of the rechargeable lithium battery was measured while performing 200 charge-discharge cycles under the condition of 25°C, 0.33 C charge, (CC/CV, 4.45 V, 0.025 C cut-off) / 1.0 C discharge (CC, 2.5 V cut-off), and a room-temperature capacity retention rate (%) was calculated according to the following Equation

D. At this time, there was also calculated a change rate (%) of the room-temperature capacity retention rate compared to Comparative 1 which did not use the two additives.

Room-temperature capacity retention rate (%) = (discharge capacity after 200 cycles/discharge capacity after 1 cycle) $\times$ 100 [Equation D]

[Table 3]

| Category | Room-temperature capacity retention rate (%) | Change rate compared to Comparative 1 (%) |
|---|---|---|
| Embodiment 1 | 99.2 | +3.0 |
| Embodiment 2 | 97.0 | +0.7 |
| Embodiment 3 | 97.3 | +1.0 |
| Embodiment 4 | 98.0 | +1.8 |
| Embodiment 5 | 97.7 | +1.5 |
| Embodiment 6 | 98.7 | +2.5 |
| Comparative 1 | 96.3 | - |
| Comparative 2 | 96.5 | +0.2 |
| Comparative 3 | 96.6 | +0.3 |
| Comparative 4 | 96.7 | +0.4 |
| Comparative 5 | 95.9 | -0.4 |

Referring to Table 3, compared to the rechargeable lithium batteries of Comparatives 1 to 5, the rechargeable lithium batteries of Embodiments 1 to 6 have their excellent cycle characteristics at room temperature. For example, the rechargeable lithium batteries, fabricated with the electrolyte including the first additive represented by Chemical Formula 1 and the second additive represented by Chemical Formula 2 in Embodiments 1 to 6, were found to have their superior capacity retention rate at room temperature compared to the rechargeable lithium batteries of Comparatives 1 to 5. For example, the rechargeable lithium batteries of Embodiments 1 to 6 have their excellent room-temperature capacity retention rate compared to the rechargeable lithium battery of Comparative 1 which did not use the first and second additives.

As an electrolyte for a rechargeable lithium battery according to an embodiment of the present disclosure includes a first additive represented by Chemical Formula 1 and a second additive represented by Chemical Formula 2, it may be possible to improve lifespan characteristics and stability not only at room temperature but also at high temperatures during activation of the rechargeable lithium battery.

**Claims**

**1.** An electrolyte for a rechargeable lithium battery (100), the electrolyte comprising:

a lithium salt;
a non-aqueous organic solvent;
a first additive represented by Chemical Formula 1; and
a second additive represented by Chemical Formula 2,

[Chemical Formula 1]

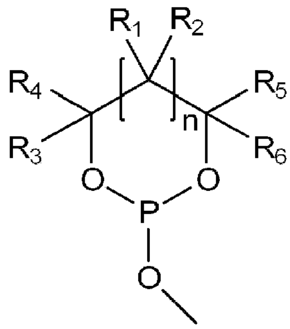

[Chemical Formula 2]

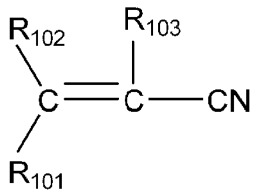

wherein, in Chemical Formulae 1 and 2,

$R_1$ to $R_6$ are each identical or different, and are each independently hydrogen, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group,
$R_{101}$ and $R_{102}$ are each independently hydrogen or a substituted or unsubstituted C1 to C10 alkyl group,
$R_{103}$ is hydrogen, a substituted or unsubstituted C1 to C10 alkyl group, a substituted or unsubstituted C2 to C10 alkenyl group, or a substituted or unsubstituted C6 to C20 aryl group, and
n is an integer of 0 to 10,

wherein the term "substituted" refers to that at least one hydrogen is substituted by deuterium, a halogen group, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, C1 to C20 alkoxy group, a C1 to C10 fluoroalkyl group, or a cyano group.

**2.** The electrolyte of claim 1, wherein the first additive is represented by Chemical Formula 1-1 or Chemical Formula 1-2,

[Chemical Formula 1-1]

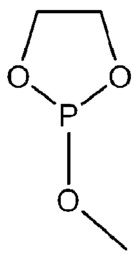

[Chemical Formula 1-2]

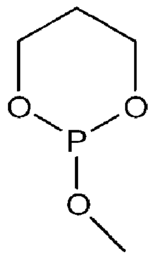
.

3. The electrolyte of claim 1 or 2, wherein the second additive is represented by Chemical Formula 2-1, Chemical Formula 2-2, or Chemical Formula 2-3,

[Chemical Formula 2-1]

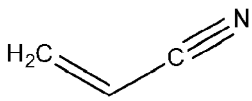

[Chemical Formula 2-2]

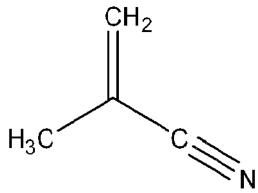

[Chemical Formula 2-3]

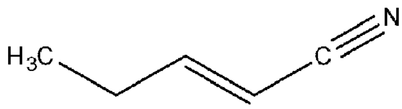
.

4. The electrolyte of any one of the preceding claims, wherein the first additive is present in an amount of 0.05 wt% to 5 wt% relative to a total weight of the electrolyte for the rechargeable lithium battery, and the second additive is present in an amount of 0.01 wt% to 5 wt% relative to a total weight of the electrolyte for the rechargeable lithium battery.

5. The electrolyte of any one of the preceding claims, wherein a weight ratio of the first additive and the second additive is in a range of 1:10 to 10:1.

6. The electrolyte of claim 5, wherein a weight ratio of the first additive and the second additive is in a range of 1:2 to 2:1.

7. The electrolyte of any one of the preceding claims, wherein the lithium salt comprises one or more of $LiPF_6$, $LiClO_4$, $LiBF_4$, lithium bis(fluorosulfonyl)imide, LiTFSI, $LiSO_3CF_3$, LiBOB, LiFOB, LiDFBOP, LiTFOP, $LiPO_2F_2$, $LiSbF_6$, $LiAsF_6$, $LiAlO_2$, $LiAlCl_4$, LiCl, LiI, $LiN(SO_3C_2F_5)_2$, $Li(FSO_2)_2N$, and $LiC_4F_9SO_3$, and wherein a concentration of the lithium salt is in a range of 0.1 M to 2.0 M.

8. The electrolyte of any one of the preceding claims, wherein the non-aqueous organic solvent comprises one or more of ethylene carbonate (EC), propylene carbonate (PC), propyl propionate (PP), ethylmethyl carbonate (EMC), dimethyl carbonate (DMC), diethyl carbonate (DEC), dipropyl carbonate (DPC), methylpropyl carbonate (MPC), ethylpropyl carbonate (EPC), and butylene carbonate (BC).

9. The electrolyte of claim 8, wherein the non-aqueous organic solvent comprises ethylene carbonate (EC), ethylmethyl

carbonate (EMC), and dimethyl carbonate (DMC).

**10.** The electrolyte of claim 9, wherein the ethylene carbonate (EC), ethylmethyl carbonate (EMC), and dimethyl carbonate (DMC) have a volume ratio of 1:a:b,

wherein a is 1 to 3, and
wherein b is 0.5 to 2.

**11.** A rechargeable lithium battery (100), comprising:

a positive electrode (10) that comprises a positive electrode active material;
a negative electrode (20) that comprises a negative electrode active material; and
the electrolyte as set forth in any one of the preceding claims.

**12.** The rechargeable lithium battery (100) of claim 11, wherein the positive electrode active material comprises a lithium-iron-phosphate-based compound.

**13.** The rechargeable lithium battery of claim 11, wherein the positive electrode active material comprises lithium composite oxide represented by Chemical Formula 3,

[Chemical Formula 3] $Li_xM^1_yM^2_zM^3_{1-y-z}O_{2-a}X_a$

wherein, in Chemical Formula 3,

$0.5 \leq x \leq 1.8$, $0 < y \leq 1$, $0 \leq z \leq 1$, $0 \leq a \leq 0.05$, and $0 \leq y+z \leq 1$,
$M^1$, $M^2$, and $M^3$ are each independently one or more elements selected from Ni, Co, Mn, Al, B, Ba, Ca, Ce, Cr, Fe, Mo, Nb, Si, Sr, Mg, Ti, V, W, Zr, and La, and
X is one or more elements selected from F, S, P, and Cl.

**14.** The rechargeable lithium battery of claim 11, wherein the positive electrode active material comprises one or more of lithium iron phosphate (LFP), lithium manganese iron phosphate (LMFP), lithium nickel cobalt aluminum oxide (NCA), lithium nickel cobalt manganese oxide (NCM), lithium cobalt oxide (LCO), lithium manganese oxide (LMO), and lithium nickel manganese oxide (LNMO).

**15.** The rechargeable lithium battery of any one of claims 11 to 14, wherein the negative electrode active material comprises a carbon-based negative electrode active material, a Si-based negative electrode active material, a Sn-based negative electrode active material, or a combination thereof.

FIG. 1

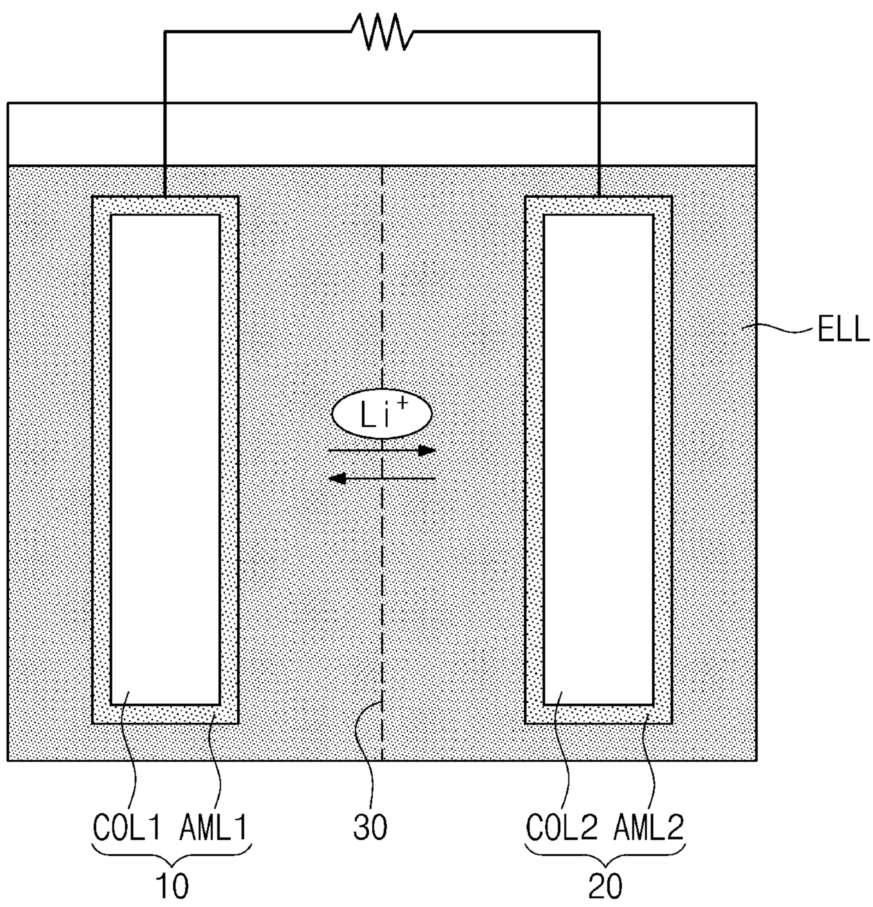

FIG. 2

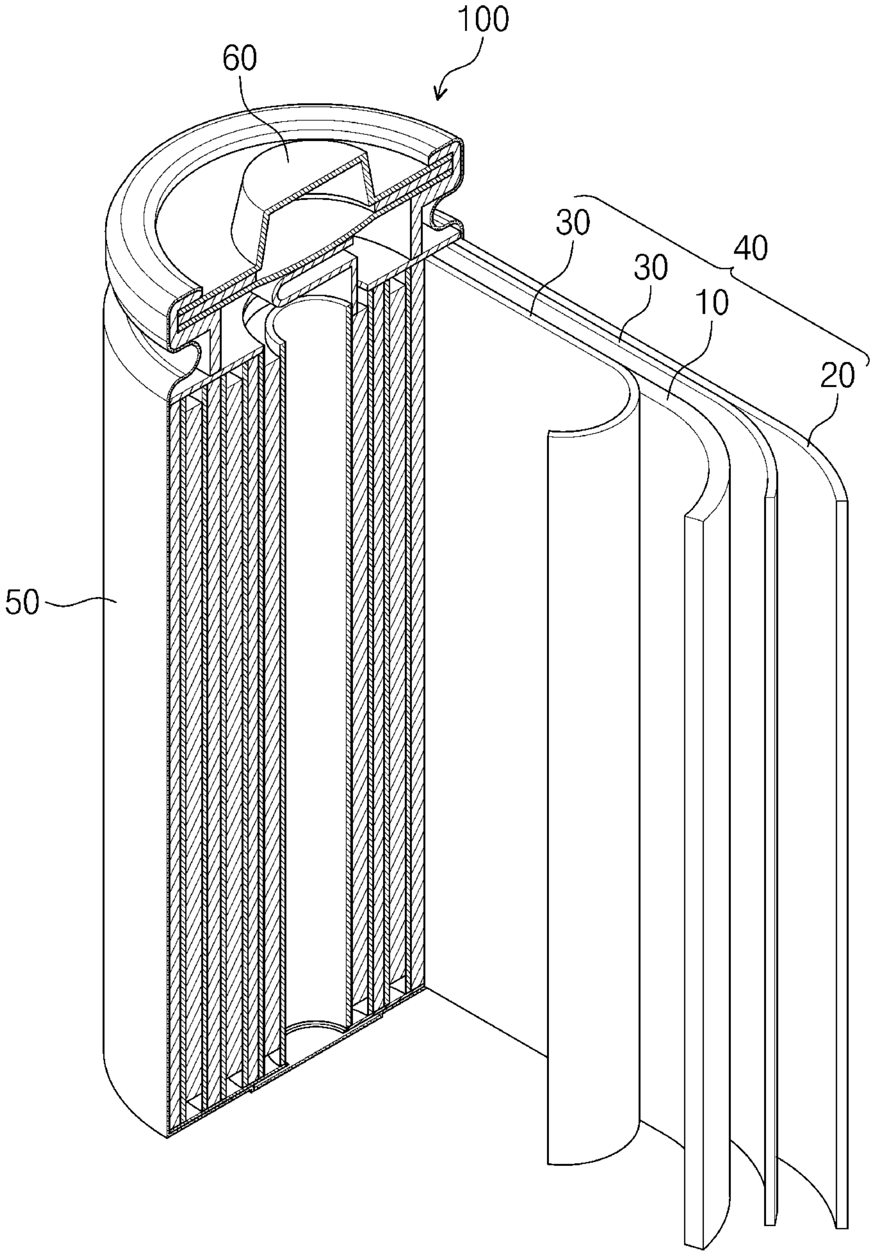

FIG. 3

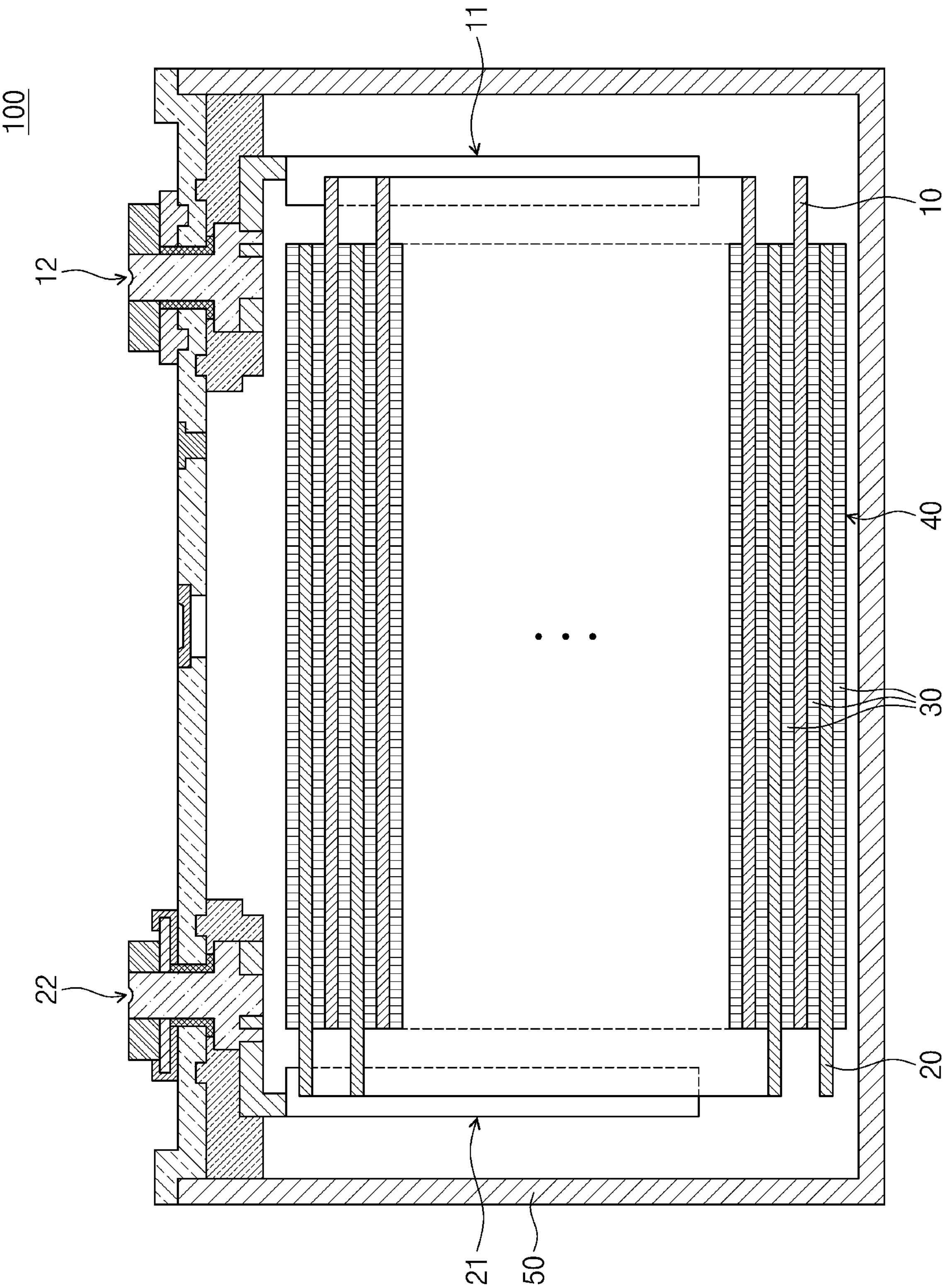

FIG. 4

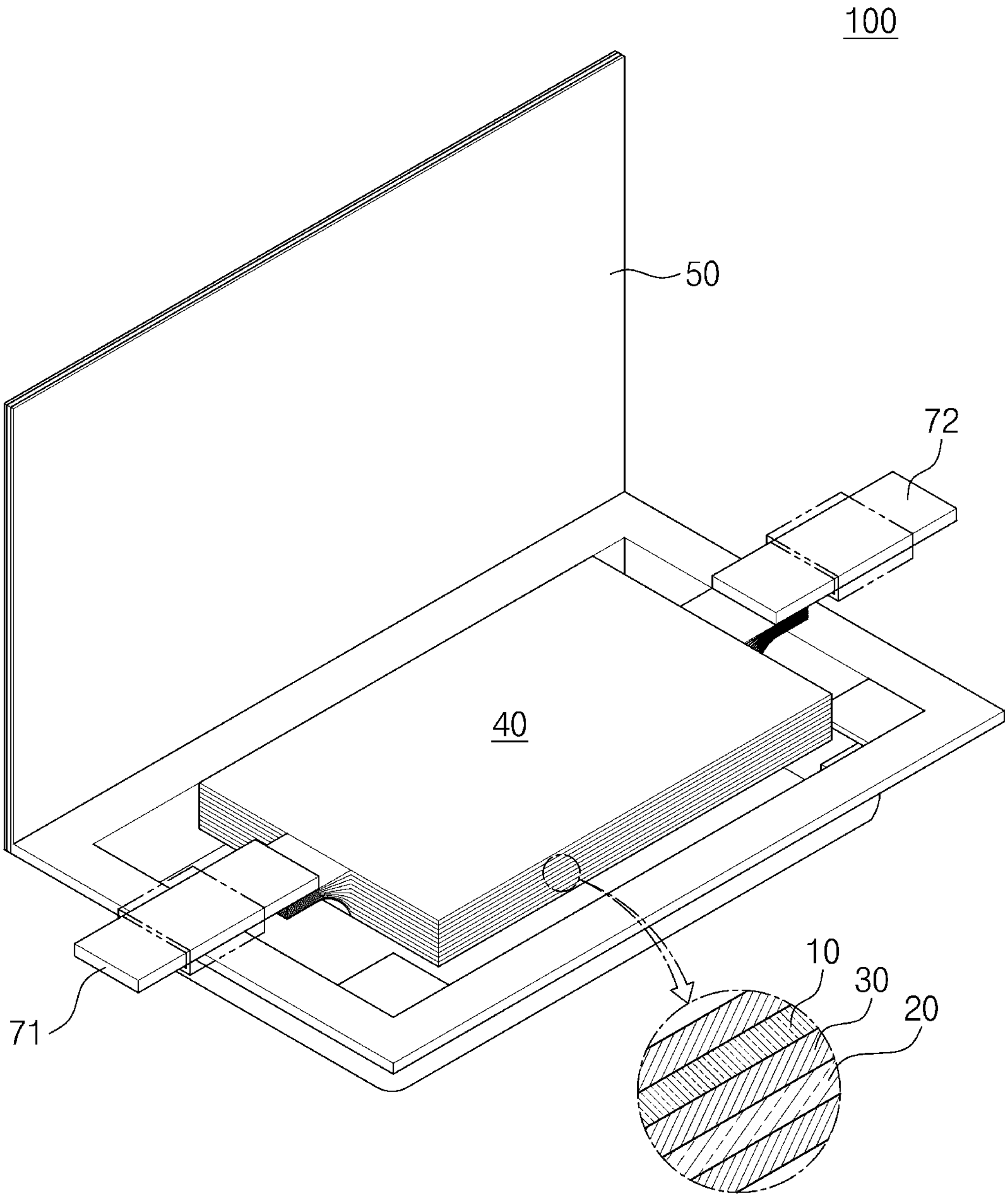

FIG. 5

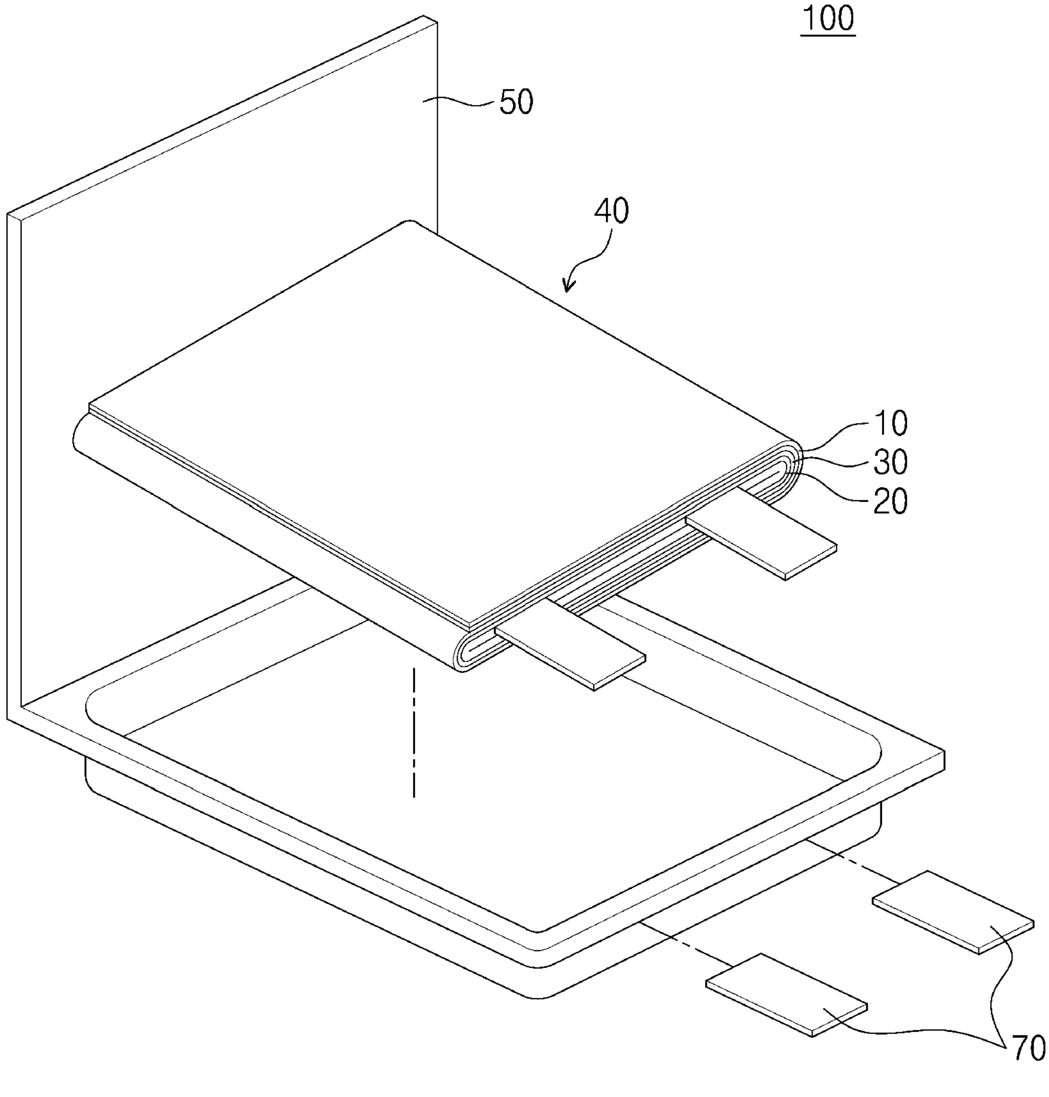

European Patent Office

# EUROPEAN SEARCH REPORT

Application Number
EP 25 18 7135

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | JP 2011 108454 A (MITSUBISHI CHEM CORP) 2 June 2011 (2011-06-02)<br>* paragraphs [0003], [0007] - [0038], [0041] - [0059], [0069] - [0072], [0093] - [0096], [0112] * | 1-15<br>1-15 | INV.<br>H01M10/0567<br>H01M10/0568<br>H01M10/0569 |
| X<br>Y | CN 117 638 232 A (SVOLT ENERGY TECH CO LTD) 1 March 2024 (2024-03-01)<br>* claims 1, 5-10;<br>paragraphs [0008] - [0034] * | 1-15<br>1-15 | |
| X<br>Y | EP 2 746 288 A1 (SAMSUNG SDI CO LTD [KR]) 25 June 2014 (2014-06-25)<br>* paragraphs [0005] - [0015], [0039] - [0048], [0051] - [0052] * | 1-14<br>1-15 | |
| Y | CN 108 365 265 A (ZHONGSHAN HONGYI NEW MAT CO LTD) 3 August 2018 (2018-08-03)<br>* claims 4-10;<br>paragraphs [0008] - [0034] * | 1-15 | TECHNICAL FIELDS SEARCHED (IPC) |
| Y | US 2023/253620 A1 (FAUSTOV ARTEM [FI] ET AL) 10 August 2023 (2023-08-10)<br>* claims 1, 4-5, 17, 29-30, 32;<br>paragraphs [0003] - [0008], [0020] - [0022], [0025] - [0028], [0033] * | 1-15 | H01M |

The present search report has been drawn up for all claims

1

| Place of search | Date of completion of the search | Examiner |
|---|---|---|
| The Hague | 16 December 2025 | Bravo Diaz, Laura |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 25 18 7135

This annex lists the patent family members relating to the patent documents cited in the above-mentioned European search report. The members are as contained in the European Patent Office EDP file on
The European Patent Office is in no way liable for these particulars which are merely given for the purpose of information.

16-12-2025

| Patent document cited in search report | | Publication date | Patent family member(s) | | | Publication date |
|---|---|---|---|---|---|---|
| JP 2011108454 | A | 02-06-2011 | JP | 5471333 | B2 | 16-04-2014 |
| | | | JP | 2011108454 | A | 02-06-2011 |
| CN 117638232 | A | 01-03-2024 | NONE | | | |
| EP 2746288 | A1 | 25-06-2014 | CN | 103887562 | A | 25-06-2014 |
| | | | EP | 2746288 | A1 | 25-06-2014 |
| | | | JP | 2014123560 | A | 03-07-2014 |
| | | | KR | 20140081468 | A | 01-07-2014 |
| | | | US | 2014178748 | A1 | 26-06-2014 |
| CN 108365265 | A | 03-08-2018 | NONE | | | |
| US 2023253620 | A1 | 10-08-2023 | CN | 116018705 | A | 25-04-2023 |
| | | | EP | 4173068 | A1 | 03-05-2023 |
| | | | FI | 20205686 | A1 | 27-12-2021 |
| | | | JP | 2023531038 | A | 20-07-2023 |
| | | | KR | 20230029928 | A | 03-03-2023 |
| | | | TW | 202209738 | A | 01-03-2022 |
| | | | US | 2023253620 | A1 | 10-08-2023 |
| | | | WO | 2021260274 | A1 | 30-12-2021 |

EPO FORM P0459

For more details about this annex : see Official Journal of the European Patent Office, No. 12/82